(19)

Europäisches
Patentamt
European
Patent Office
Office européen
des brevets

(11) **EP 1 574 555 B1**

(12) **EUROPEAN PATENT SPECIFICATION**

(45) Date of publication and mention
of the grant of the patent:
**11.04.2007 Bulletin 2007/15**

(51) Int Cl.:
***C09D 151/00*** *(2006.01)*

(21) Application number: **05251195.3**

(22) Date of filing: **28.02.2005**

(54) **Aqueous polymer dispersion and method of use**

Wässrige Polymerdispersion und Verwendungsverfahren

Dispersion polymerique aqueuse et procede d'utilisation

(84) Designated Contracting States:
**DE FR GB SE**

(30) Priority: **11.03.2004 US 552266 P**

(43) Date of publication of application:
**14.09.2005 Bulletin 2005/37**

(73) Proprietor: **ROHM AND HAAS COMPANY
Philadelphia,
Pennsylvania 19106-2399 (US)**

(72) Inventors:
• **Brady, Jean Marie
Maple Glen
Pennsylvania 19002 (US)**

• **Fradkin, Deborah Gay
Horsham
Pennsylvania 19044 (US)**
• **Gebhard, Matthew Stewart
New Britain
Pennsylvania 18901 (US)**
• **Puschak, Caren Ann
Norristown
Pennsylvania 19403 (US)**

(74) Representative: **Buckley, Guy Julian et al
Rohm and Haas (UK) Ltd.
European Patent Department
4th Floor, 22 Tudor Street
London EC4Y 0AY (GB)**

(56) References cited:
**EP-A- 0 609 756**

**Description**

This invention generally relates to an aqueous polymer dispersion suitable for providing dry coatings having improved dirt pickup resistance and an acceptable level of scrub resistance. More particularly, this invention relates to an aqueous polymer dispersion including from 60 to 95 weight % first polymer particles and from 5 to 40 weight% second polymer particles. The second polymer particles include multiethylenically unsaturated monomer as polymerized units. This invention also includes a method for preparing a dry coating from an aqueous coating composition including the aqueous polymer dispersion.

Dirt pickup resistance, a generally recognized desirable characteristic of a coating, is the ability to minimize the accumulation of material such as dirt, dust, and soot onto the surface of the coating. Coatings with poor dirt pickup resistance are characterized as having an unclean, darkened appearance. The coating must also have a desired balance of other properties, including acceptable scrub resistance. Further, it is desired that such a coating is optionally formed from a coating composition that contains a low level of volatile organic compounds (VOC), or preferably, is formulated in the absence of volatile organic compounds.

U.S. Patent 5,731,377 is directed to a polymer blend useful as a binder in an aqueous coating composition. The disclosed polymer blend contains from 20 to 60 weight % of a hard emulsion polymer with a glass transition temperature greater than room temperature, and from 40 to 80 weight % of a soft emulsion polymer having a glass transition temperature of less than 15 °C. The reference discloses that the polymer blend is useful in paint compositions that provide good block resistance without the use of volatile organic compounds such as a coalescent to aid in film formation. Despite this disclosure, coating compositions are desired that provide dry coatings having both acceptable scrub resistance and acceptable dirt pickup resistance.

The problem faced by the inventors is the provision of a suitable aqueous polymer dispersion, an aqueous coating composition including the dispersion, and a method for preparing a dry coating so that a useful level of dirt pickup resistance can be effected while maintaining an acceptable level of scrub resistance, particularly in a low VOC aqueous coating composition. The inventors have discovered an aqueous polymer dispersion including certain first polymer particles and certain second polymer particles that achieve this desired end. This aqueous polymer dispersion, which contains surprisingly soft, i.e., low Tg, second polymer particles containing multiethylenically unsaturated monomer as polymerized units, provides a dry coating having useful levels of scrub resistance and suitable levels of dirt pickup resistance.

In a first aspect of the present invention there is provided an aqueous polymer dispersion comprising: a) from 60 to 95 weight % first polymer particles, and b) from 5 to 40 weight % second polymer particles, based on the total weight of said first polymer particles and said second polymer particles; wherein said first polymer particles have a glass transition temperature in the range of from -20 °C to 25 °C; wherein said second polymer particles have a glass transition temperature of less than 0 °C, and wherein said second polymer particles comprise as polymerized units, monoethylenically unsaturated monomer and at least 0.2 mole % multiethylenically unsaturated monomer, based on the total number of moles of said monoethylenically unsaturated monomer and said multiethylenically unsaturated monomer in said second polymer particles.

In a second aspect of the present invention there is provided an aqueous coating composition comprising the aqueous polymer dispersion of the first aspect of the present invention wherein said coating composition has a VOC of from 0 to 5%, by weight based on the total weight of said aqueous coating composition.

In a third aspect of the present invention there is provided a method for preparing a dry coating comprising the steps of: a) providing an aqueous coating composition, said composition comprising an aqueous polymer dispersion comprising: i) from 60 to 95 weight % first polymer particles, and ii) from 5 to 40 weight % second polymer particles, based on the total weight of said first polymer particles and said second polymer particles; wherein said first polymer particles have a glass transition temperature in the range of from -20 °C to 25 °C; wherein said second polymer particles have a glass transition temperature of less than 0 °C, and wherein said second polymer particles comprise as polymerized units, monoethylenically unsaturated monomer and at least 0.2 mole % multiethylenically unsaturated monomer, based on the total number of moles of said monoethylenically unsaturated monomer and said multiethylenically unsaturated monomer comprising said second polymer particles: b) applying said aqueous coating composition to a substrate; and c) drying or allowing to dry said aqueous coating composition.

"Glass transition temperature" or «$T_g$» as used herein, is that calculated by the Fox equation *[Bulletin of the American Physical Society* 1, 3 Page 123 (1956)] as follows:

$$\frac{1}{T_g} \approx \frac{w_1}{T_{g(1)}} + \frac{w_2}{T_{g(2)}}$$

For a polymer formed from two different monomers, $w_1$ and $w_2$ refer to the weight fraction of the two comonomers, and $T_{g(1)}$ and $T_{g(2)}$ refer to the glass transition temperatures of the two corresponding homopolymers in degrees Kelvin. For polymers formed from three or more monomers, additional terms are added ($w_n/T_{g(n)}$). The $T_g$ of a polymer phase can also be calculated by using the appropriate values for the glass transition temperatures of homopolymers, which can be found, for example, in "Polymer Handbook", edited by J. Brandrup and E. H. Immergut, Interscience Publishers. The values of $T_g$ reported herein are calculated using the Fox equation.

As used herein, the use of the term "(meth)" followed by another term such as acrylate refers to both acrylates and methacrylates. For example, the term "(meth)acrylate" refers to either acrylate or methacrylate; the term "(meth)acrylic" refers to either acrylic or methacrylic; the term "(meth)acrylonitrile" refers to either acrylonitrile or methacrylonitrile; and the term "(meth)acrylamide" refers to either acrylamide or methacrylamide.

As used herein, the term "aqueous polymer dispersion" refers to a composition containing discrete polymer particles dispersed in an aqueous medium, an aqueous medium being a single phase containing at least 50% by weight water.

The aqueous polymer dispersion of this invention includes from 60 to 95 weight % first polymer particles and from 5 to 40 weight % second polymer particles, based on the total weight of said first polymer particles and said second polymer particles dispersed in an aqueous medium. The first polymer particles have a glass transition temperature of in the range of from -20 °C to 25 °C, preferably in the range of from -15 °C to 20 °C, and more preferably in the range of from -10 °C to 15 °C. The second polymer particles have a glass transition temperature of less than 0 °C, preferably in the range of from -85 °C to less than zero, and more preferably in the range of from -60 °C to -10 °C.

The first polymer particles and the second polymer particles are addition polymers, formed from polymerized ethylenically unsaturated monomer. Suitable ethylenically unsaturated monomers include monoethylenically unsaturated monomers and multiethylenically unsaturated monomers.

Examples of suitable monoethylenically unsaturated monomers include ethylene, styrene or alkyl-substituted styrenes such as vinyl toluene; vinyl esters such as vinyl acetate and vinyl propionate; vinyl halides such as vinyl chloride and vinylidene chloride; and monoethylenically unsaturated (meth)acrylic monomers. Examples of monoethylenically unsaturated (meth)acrylic monomers include, but are not limited to, esters, amides, and nitriles of (meth)acrylic acid, such as, for example, $C_1$ to $C_{24}$ alkyl esters of (meth)acrylic acid such as methyl (meth)acrylate, ethyl (meth)acrylate, butyl (meth)acrylate, 2-ethylhexyl (meth)acrylate, decyl (meth)acrylate, lauryl (meth)acrylate, and stearyl (meth)acrylate; hydroxyalkyl (meth)acrylates such as hydroxyethyl (meth)acrylate and hydroxypropyl (meth)acrylate; amine containing (meth)acrylates such as aminoalkyl (meth)acrylate, N-alkyl aminoalkyl (meth)acrylate, and N,N-dialkyl aminoalkyl (meth)acrylate; (meth)acrylonitrile; and (meth)acrylamide. Further examples of suitable monoethylenically unsaturated monomers include aldehyde reactive group-containing monomers as taught in EP 1,352,924 including, for example, acetoacetoxyethyl (meth)acrylate and ethyleneurea-group containing monomers. Preferred monoethylenically unsaturated monomers include methyl methacrylate, butyl methacrylate, ethyl acrylate, butyl acrylate, 2-ethylhexyl acrylate, styrene, and acrylonitrile.

Other suitable monoethylenically unsaturated monomers include monoethylenically unsaturated acid monomer that can be used at a level of from 0.1 to 10% by weight and preferably from 0.5 to 5 weight %, based on polymer weight in either or both of the first polymer particles and the second polymer particles, such as, for example, carboxylic acid-containing monomers and anhydride monomers such as (meth)acrylic acid, crotonic acid, itaconic acid, fumaric acid, maleic acid, monomethyl itaconate, monomethyl fumarate, monobutyl fumarate, and maleic anhydride; sulfur acid containing monomers such as sulfoethyl (meth)acrylate, 2-acrylamido-2-methylpropane sulfonic acid, vinyl sulfonic acid, styrene sulfonic acid, sulfophthalic acid, amino or diamino alkyl or aryl sulfonic acids including 1,4-butane diol-2-sulfonic acid; phosphorus acid containing monomers including phosphoalkyl (meth)acrylate; and salts thereof. Preferred monoethylenically unsaturated acid monomers include acrylic acid, methacrylic acid, itaconic acid and phosphoethyl methacrylate.

In one embodiment either or both of the first polymer particles and the second polymer particles can include, as copolymerized units, from 0.25 to 2.5 weight%, preferably from 0.5 to 2.0 weight%, based on the weight of the polymer particles, itaconic acid, (meth)acrylamide, or both.

Examples of suitable multiethylenically unsaturated monomers include di-ethylenically unsaturated monomers such as allyl (meth)acrylate, diallyl phthalate, 1,3-butylene glycol di(meth)acrylate, 1,6-hexanediol di(meth)acrylate, tripropylene glycol di(meth)acrylate, diethylene glycol di(meth)acrylate, polyalkylene glycol di(meth)acrylate, divinyl toluene, butadiene, divinyl naphthalene, and divinyl benzene; and tri-ethylenically unsaturated monomers such as trimethylolpropane tri(meth)acrylate and trivinyl benzene.

One or more monoethylenically unsaturated monomers are used to prepare the first polymer particles. Low levels of multiethylenically unsaturated monomer, as polymerized units, are optionally included in the first polymer particles, provided that the quality of film formation is not materially impaired. The first polymer particles typically contain less than 0.2 mole %, preferably less than 0.1 mole %, and more preferably less than 0.05 mole % multiethylenically unsaturated monomer as polymerized units, based on the total moles of ethylenically unsaturated monomer included as polymerized units in the first polymer particles. Still more preferred are first polymer particles prepared in the absence of multiethylenically unsaturated monomer. Further, the first polymer particles are substantially uncrosslinked, when they are applied to a substrate in the method of this invention, although low levels of deliberate or adventitious crosslinking are optionally present. Typically, the first polymer particles have a weight average molecular weight as measured by gel permeation chromatography in the range of 75,000 to greater than 2,000,000.,

The second polymer particles include as polymerized units, at least one monoethylenically unsaturated monomer and at least one multiethylenically unsaturated monomer. The amount of polymerized multiethylenically unsaturated monomer in the second polymer particles is at least 0.2 mole %, based on the total moles of ethylenically unsaturated monomer contained as polymerized units in the second polymer particles. Preferably, the second polymer particles include as polymerized units, from 0.3 mole % to 10 mole %, and more preferably, from 0.5 mole % to 2.0 mole % multiethylenically unsaturated monomer, based on the total moles of ethylenically unsaturated monomer included as polymerized units in the second polymer particles.

In one embodiment, the second polymer particles are core/shell polymer particles containing a core of second polymer and a polymer shell. The polymer shell partially or fully encapsulates the second polymer core. The second polymer is as described above. The optional polymer shell has a glass transition temperature of at least 60 °C, preferably at least 70 °C, and more preferably at least 80 °C. The second polymer particles of this embodiment typically contain from 65 to 97 weight % and preferably from 80 to 95 weight % of the second polymer; the amount of the polymer shell is typically in the range of from 3 to 35 weight % and preferably from 5 to 20 weight % of the second polymer particles of this embodiment.

In one embodiment, the first polymer particles or the second polymer particles contain vinyl toluene as a polymerized unit. Suitable levels of polymerized vinyl toluene are in the range of from 0.1 to 8 weight %, preferably in the range of from 0.5 to 5 weight %, and more preferably in the range of from 1 to 5 weight %, based on the weight of the first polymer particles or the second polymer particles, respectively.

Suitable average particle diameters for the first polymer particles or for the second polymer particles are in the range of from 50 nanometers (nm) to 500 nm. The aqueous polymer dispersion can contain first polymer particles and second polymer particles with the same average particle diameters or with different particle diameters. Average particle diameter is measured by a quasielastic light scattering technique, such as provided, for example, by the Model BI-90 Particle Sizer of Brookhaven Instruments Corp. A first aqueous dispersion containing the first polymer particles or a second aqueous dispersion containing the second polymer particles can have a unimodal particle size distribution or a multimodal particle size distribution, including a bimodal particle size distribution.

Emulsion polymerization techniques are typically employed to prepare the first polymer particles or the second polymer particles. The practice of emulsion polymerization is discussed in detail in D.C. Blackley, *Emulsion* Polymerization (Wiley, 1975) and in H. Warson, *The Applications of Synthetic Resin Emulsions,* Chapter 2 (Ernest Benn Ltd., London 1972). Conventional surfactants are optionally used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the total weight of monomers employed in the synthesis.

Another optional synthesis adjuvant is a chain transfer agent, which moderates the molecular weight of the first polymer particles or the second polymer particles. Suitable chain transfer agents include, for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate. Generally, an amount of from 0.001 to 0.05, preferably 0.0025 to 0.05 moles per kg weight of the first polymer particles or second polymer particles, is used. Linear or branched $C_4$-$C_{22}$ alkyl mercaptans such as n-dodecyl mercaptan and t-dodecyl mercaptan are preferred. Methods to add the chain transfer agent(s) include one or more additions, which are continuous, linear, or not, over most or all of the entire reaction period or during limited portion(s) of the reaction period such as, for example, in the kettle charge and in the reduction of residual monomer stage.

The reaction temperature for emulsion polymerization is typically maintained at a temperature lower than 100 °C throughout the course of the reaction. Preferred is a reaction temperature between 30 °C and 95 °C, more preferably between 50 °C and 90 °C. The monomer mixture can be added neat or alternatively as an emulsion in water. Methods to add the monomer mixture include one or more additions, and continuous addition; wherein the addition of the monomer is, linear or not, over the reaction period, or combinations thereof.

Suitable polymerization processes to prepare the first polymer particles or the second polymer particles include redox polymerization and polymerization in the presence of a controlled amount of unreacted monomer.

One method to prepare the first polymer particles or the second polymer particles is a redox polymerization process. This process employs a redox initiation system that includes at least one initiator, which is commonly referred to as an oxidant, and one or more reductants. Suitable oxidants for redox polymerization include, for example, hydrophilic initiators such as hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, ammonium or alkali metal salts of peroxydisulfuric acid; and t-alkyl hydroperoxides, including t-amyl hydroperoxide, t-alkyl peroxides, or t-alkyl peresters wherein the t-alkyl group includes at least 5 carbon atoms. Typical oxidant levels are in the range of from 0.01% to 3.0% by weight, based on total weight of monomers. Suitable reductants include, for example, sodium sulfoxylate formaldehyde, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, hydroxymethanesulfonic acid, amines such as ethanolamine, glycolic acid, glyoxylic acid hydrate, ascorbic acid, isoascorbic acid, lactic acid, glyceric acid, malic acid, 2-hydroxy-2-sulfinatoacetic acid, tartaric acid, and salts of the preceding acids typically at a level of 0.01% to 3.0% by weight, based on dry polymer weight. Redox reaction catalyzing metal salts of iron, copper, manganese, silver, platinum, vanadium, nickel, chromium, palladium, or cobalt are optionally used. The oxidant and optional reductant are typically added to the reaction mixture together, in separate feeds, in one or more shots, or gradually, whether uniformly or not, or in combinations thereof or variations thereon as is desired. Preferably, the oxidant and the optional reductant are added concurrently with the monomer mixture. The redox polymerization is preferably carried out at pH of 4 to 8.

In one embodiment, a redox polymerization process is employed to prepare the first polymer particles. Preferably, at least 40% by weight, preferably at least 75% by weight, more preferably at least 95% by weight, based on the weight of the first polymer particles, of the first polymer particles are formed by redox polymerization. Preferably, the last 40 weight %, more preferably the last 75 weight %, and most preferably the last 95 weight % of the first polymer particles are formed by redox polymerization. The redox polymerization is contemplated to include embodiments where some of the polymer is introduced by a polymer seed, formed in situ or not, or formed during hold periods or formed during periods wherein the monomer feed has ended and residual monomer is being converted to polymer.

In a further embodiment, at least 40% by weight, preferably at least 75% by weight, more preferably at least 95% by weight, based on the weight of the first polymer particles, of the first polymer particles are formed by redox polymerization in the presence of 0.001 to 0.05 moles chain transfer agent per kg of weight of the first polymer particles, by which is meant herein that at least the designated amount of first polymer particles are formed by redox emulsion polymerization and that this polymerization is effected contemporaneously with the prior presence and/or addition of a total of 0.001 to 0.05 moles chain transfer agent per kg of weight of the first polymer particles.

An alternate method to prepare the first polymer particles is a polymerization process having controlled conversion of the monomer to polymer, referred to herein as "controlled conversion process". In this controlled conversion process, the monomer is added to an aqueous reaction medium and polymerized in the presence of excess unreacted monomer to form the first polymer particles as is disclosed in EP 1352924.

In the controlled conversion process or the redox process, the level of unreacted monomer remaining after the formation of the first polymer particles is typically reduced by various techniques known in the polymerization arts. Examples of such techniques include addition of one or more charges of initiator to polymerize the residual monomer including the methods disclosed in US Patent Application No. 20020160182, or removal of the unreacted monomer by distillation or steam stripping, as disclosed in U.S. Patent No. 6,348,636.

Generally, the aqueous polymer dispersion is prepared by combining a first aqueous dispersion containing the first polymer particles and a second aqueous dispersion containing the second polymer particles.

The aqueous polymer dispersion typically includes from 20 to 80 weight % polymeric particles, based on the weight of the aqueous polymer dispersion.

The aqueous coating composition includes the aqueous polymer dispersion. Other materials are optionally included in the aqueous coating composition including rheology modifiers; coalescents; solvents; biocides; wetting agents; defoamers; dyes; humectants; waxes; surfactants; fillers or extenders; colorants; flatting agents; neutralizers; buffers; freeze-thaw additives; plasticizers; antifoaming agents; tackifiers; hindered amine light stabilizers; photoabsorbers such as benzophenone, substituted benzophenones, and substituted acetophenones; dispersants; anti-oxidants; and pigments. The photoabsorber can combined with the aqueous polymer dispersion or can be added to the aqueous coating composition subsequently. Suitable levels of photoabsorbers include from 0.1 to 5 weight %, preferably from 0.1 to 1 weight %, and more preferably from 0.2 to 0.5 weight % photoabsorber, based on the total weight of the first polymer particles and the second polymer particles.

Examples of suitable pigments include zinc oxide, antimony oxide, zirconium oxide, chromium oxide, iron oxide, lead oxide, zinc sulfide, lithopone, and titanium dioxide such as, for example, anatase and rutile titanium dioxide. It is also contemplated that the aqueous polymer dispersion optionally contains opaque polymer particles, such as, for example, Ropaque™ Opaque Polymers (Rohm and Haas Co., Philadelphia PA).

Examples of suitable extenders include calcium carbonate, calcium sulfate, barium sulfate, mica, clay, calcined clay, feldspar, nepheline, syenite, wollastonite, diatomaceous earth, alumina silicates, non-film forming polymer particles having glass transition temperatures above 35 °C; aluminum oxide, silica, and talc.

Suitable colorants include inorganic colorant particles and organic colorant particles. Suitable inorganic colorant particles include, for example, iron oxides chromium oxides; carbon black; and metal effect pigments such as aluminum, copper, copper oxide, bronze, stainless steel, nickel, zinc, and brass. Suitable organic colorant particles include, for example, azo pigments, phthalocyanine pigments, and quinacridone pigments.

The amounts of pigment and extender in the aqueous coating composition vary from a pigment volume concentration (PVC) of 0 to 85 and thereby encompass coatings otherwise described in the art, for example, as clear coatings, stains, flat coatings, satin coatings, semi-gloss coatings, gloss coatings, primers, textured coatings, and the like. The pigment volume concentration is calculated by the following formula:

$$\text{PVC (\%)} = \frac{\text{volume of pigment(s), + volume extender(s)}}{\text{total dry volume of paint}} \times 100.$$

If the aqueous polymer dispersion is to be pigmented, at least one pigment is dispersed in the aqueous medium, preferably using high shear mixing. Alternatively, at least one predispersed pigment is used. In one method, the first aqueous dispersion containing the first polymer particles and the second aqueous dispersion containing the second polymer particles are added to the pigment dispersion, either simultaneously or sequentially, with mixing under low shear stirring along with other adjuvants as desired, to provide a pigmented aqueous polymer dispersion. Alternatively, the pigment slurry is prepared in the presence of the aqueous polymer dispersion containing the first polymer particles or the second polymers particles, or both.

The solids content of the aqueous coating composition is typically in the range of from 25% to 60% by volume. The viscosity of the aqueous coating composition is typically from 50 KU (Krebs Units) to 120 KU as measured using a Brookfield Digital viscometer KU-1; the viscosities appropriate for different application methods vary considerably.

A volatile organic compound ("VOC") is defined herein as a carbon containing compound that has a boiling point below 280 °C at atmospheric pressure. Compounds such as water and ammonia are excluded from VOCs.

In one embodiment, the aqueous coating composition of this invention contains less than 5% VOC, preferably less than 3%, and more preferably less than 1.7%, by weight based on the total weight of the aqueous polymer dispersion. A "low VOC" aqueous coating composition herein is an aqueous polymer dispersion that contains from 0 to 5% VOC by weight based on the total weight of the aqueous polymer dispersion.

In a particular embodiment, the aqueous coating composition has a PVC of less than or equal to 35 and has less than 5% VOC by weight, preferably less than 3% VOC by weight, and more preferably less than 1.7% VOC by weight, based on the total weight of the aqueous coating composition. In another preferred embodiment, the aqueous coating composition has a PVC of greater than 35 and has less than 3% VOC by weight and preferably less than 1.7% by weight, based on the total weight of the aqueous coating composition. In an additional embodiment the aqueous coating composition has a PVC of less than or equal to 85 and has less than L7% VOC by weight, preferably less than 0.5% by weight, and more preferably less than 0.1% by weight, based on the total weight of the aqueous coating composition.

A method for preparing a dry coating is provided, which includes the steps of providing the aqueous coating composition including the aqueous polymer dispersion of this invention; applying the aqueous coating composition to a substrate; and drying or allowing to dry the applied aqueous coating composition to prepare the dry coating.

The aqueous coating composition can be applied to a substrate using various techniques including, for example, brushing, rolling, drawdown, dipping, with a knife or trowel, curtain coating, and spraying methods such as, for example, air-atomized spray, air-assisted spray, airless spray, high volume low pressure spray, and air-assisted airless spray. The wet coating thickness of the applied aqueous coating composition can be in the range of 1 micron to 250 microns. The aqueous coating composition can be applied onto a substrate as a single coat or multiple coats. After application, the applied aqueous coating composition is typically allowed to dry at ambient conditions or alternatively dried by the application of heat to provide a dry coating. Drying is typically allowed to proceed under ambient conditions such as, for example, at temperatures of from 0 °C to 35 °C.

The aqueous coating composition is suitable for application onto various substrates including processed wood such as medium density fiber board, chip board, and laminates; mineral substrates such as masonry, cement, fiber cement, cement asbestos, plaster, plasterboard, and glazed and unglazed ceramic; metal substrates such as galvanized iron, galvanized steel, cold rolled steel, aluminum, wrought iron, drop forged steel, and stainless steel; previously painted or primed surfaces (fresh, aged or weathered); cellulosic substrates such as paper and paperboard; glass; asphalt; leather; wallboard; nonwoven materials; and synthetic substrates such as polyvinyl chloride, polyvinylidene chloride, polyethylene, and polypropylene.

The dry coating prepared from the aqueous coating composition is suitable as a protective coating or an aesthetic coating. Examples of suitable coatings include architectural coatings such as interior and exterior paint coatings, including masonry coatings, wood coating and treatments; floor polishes; maintenance coatings such as metal coatings; paper coatings; and traffic coatings such as those coatings used to provide markings on roads, pavements, and runways.

The following examples are presented to illustrate the composition and method of the invention.

Test Procedures

Scrub Resistance: The aqueous coating composition and a comparative composition, each composition each containing 22% by volume titanium dioxide, having 36% nonvolatile material based on the total volume of the composition, and having the same VOC, less than 1.5 weight % VOC, are drawn down on a single black vinyl chart. The compositions are drawn down in such a way that the two compositions are placed side by side and drawn together by a single drawing with a 0.0762 mm (3 mil) Bird film applicator 152.4 mm (6 inch) in width. Each composition forms a 7.5 cm (3 inch) wide coating on a single chart, and the two compositions have the same coating thickness. The sample is allowed to dry at 23°C (73°F) and 50% relative humidity for 7 days. Abrasive scrub resistance is measured with a scrub machine (Gardner Abrasive Tester) using 10 g scrub medium and 5 ml water. A piece of 0.0254 mm (1-mil) thick and 76.2 mm (3 inch) wide vinyl shim is placed underneath the sample vinyl chart. The two side edges of the shim are in the center of each coating. The number of cycles required to completely cut through each coating is recorded.

The relative scrub resistance is determined by comparing the performance of an aqueous coating composition including the first and second polymer particles with a comparative aqueous polymer dispersion containing the first polymer particles and comparative second polymer particles. The aqueous polymer dispersion contains 80% by weight of first polymer particles and 20% by weight of second polymer particles, based on the total weight of polymer particles. The comparative aqueous polymer dispersion has 80% by weight of first polymer particles and 20% by weight of comparative second polymer particles, based on the total weight of polymer particles.

The relative scrub resistance is the ratio of the number of scrub cycles for the aqueous coating composition divided by the number of scrub cycles for the comparative aqueous coating composition. A relative scrub resistance value, "RS" herein, having a value of 1.1 or above is considered acceptable.

Dirt Pickup Resistance: The aqueous coating composition and a comparative composition, each composition containing 22% by volume titanium dioxide, having 36% nonvolatile material based on the total volume of the composition, and having the same VOC, less than 2.5 weight % VOC, are drawn down on separate aluminum panels at a wet thickness of 0.0762 mm (3 mil) using a Bird film applicator 76.2 mm (3 inch) in width. The samples are allowed to dry at 21°C (70°F) and 50% relative humidity for 7 days. The samples are exposed in southern Florida at a commercial exposure station (Q-LAB Weathering Research Service, Homestead, Florida). The exposure direction is south at a 45° angle. The colors of the dry coating samples are characterized by measuring initial values of L*, a*, and b* prior to exposure. After 90 days of exposure, the L*, a*, and b* values are remeasured to determine the changes in color of the dry coating samples. The changes in the values of L', referred to as "$\Delta$L*", are determined for the dry coating samples. A negative value for $\Delta$L* indicates a darkening of the dry coating as a result of the pickup of dirt and other material on the dry coating surface.

The relative dirt pickup resistance is determined by comparing the performance of the aqueous coating composition containing the first polymer particles and the second polymer particles with a comparative aqueous coating composition containing only the first polymer particles. The aqueous polymer dispersion has 80% by weight of first polymer particles and 20% by weight of second polymer particles, based on the total weight of polymer particles. The comparative aqueous polymer composition has 100% by weight of first polymer particles based on the total weight of polymer particles. The relative dirt pickup resistance is the ratio of the $\Delta$L* value for the dry coating prepared from the comparative aqueous polymer composition divided by the $\Delta$L* value for the dry coating prepared from the aqueous polymer dispersion. A relative dirt pickup resistance value, "RL" herein, having a value of 1.1 or greater indicates acceptable improvement in the dirt pickup resistance.

The abbreviations listed below are used throughout the examples.

| | |
|---|---|
| ALMA | allyl methacrylate |
| APS | ammonium persulfate |
| BA | butyl acrylate |
| DI water | deionized water |
| g | gram |
| MAA | methacrylic acid |
| MMA | methyl methacrylate |
| nm | nanometer |
| NaPS | sodium persulfate |
| ppm | parts per million based on total monomer weight |
| SLS | sodium lauryl sulfate (28 % active) |
| SSF | sodium formaldehyde sulfoxylate |
| t-BHP | tertiary butyl hydroperoxide |

Tg        glass transition temperature
VT        vinyl toluene
wt %      weight %

EXAMPLE 1 - Preparation of Aqueous Dispersions Containing First Polymer Particles

Example 1.1 - A monomer emulsion is prepared by combining 600 g BA, 20 g MAA, 365 g MMA, 15 g ureido methacrylate, 1.25 g nDDM, 415 g DI water, 6.9 g sodium carbonate, and 30.5 g SLS and emulsifying with stirring. Next, 5.2 g SLS and 380 g DI water are charged to a three-liter multi-neck flask fitted with mechanical stirring. The flask contents are heated to 65 °C under a nitrogen atmosphere. To the stirred flask contents is added 35 g of the monomer emulsion followed by 0.02 g ferrous sulfate heptahydrate and 0.02 g tetrasodium salt of ethylenediaminetetraacetic acid in 15.6 g DI water. Polymerization is initiated by the addition of 0.54 g APS in 8 g DI water followed by 0.27 g sodium hydrosulfite in 8 g DI water; gradual addition of the monomer emulsion is then begun. Separate solutions of 2.9 g APS in 50 g DI water and 1 g of D-isoascorbic acid in 50 g DI water are added concurrently with the monomer emulsion. The temperature is maintained at 65 °C throughout the addition of the monomer emulsion. The emulsion feed line is rinsed with 20 g DI water. After completion of the monomer emulsion addition, the contents of the flask are cooled to 60 °C. An aqueous solution containing 10 ppm ferrous sulfate, 1 g t-butyl hydroperoxide, and 0.5 g D-isoascorbic acid is added. The contents are neutralized to a pH of 9.5 with ammonium hydroxide. The resulting first aqueous dispersion, Example 1.1, contains 49.2 wt % first polymer particles, based on the total weight of the dispersion. The first polymer particles of Example 1.1 have a Tg of -10 °C.

Example 1.2 - An aqueous dispersion including first polymer particles is prepared by a thermally initiated controlled conversion process. A monomer emulsion is prepared by combining 480 g MMA, 500 g BA, 20 g MAA, 1.25 g nDDM, 455 g DI water, and 30.5 g SLS and emulsifying with stirring. Next, 5.2 g SLS and 215 g DI water are charged to a stirred 3-liter multi-neck flask. The contents of the flask are heated to 88 °C under a nitrogen atmosphere. To the stirred flask contents are added 35 g of the monomer emulsion followed by a solution containing 0.35 g sodium carbonate and 0.3 g APS in 20 g DI water. Next, the monomer emulsion is gradually added to the flask along with the concurrent addition of a solution containing 1.05 g APS and 6.55 g sodium carbonate in 50 g DI water. Throughout the addition of the monomer emulsion, the contents are maintained at 88 °C. After the additions are complete, the emulsion feed line is rinsed with 20 g DI water, which is added to the flask. Next, the contents of the flask are cooled to 60 °C and an aqueous solution containing 10 ppm ferrous sulfate, 1 g t-butyl hydroperoxide, and 0.5 g D-isoascorbic acid is added. The contents of the flask is neutralized to a pH of 9.5 with ammonium hydroxide. The resulting aqueous dispersion, Example 1.2, contains 50.2 wt % first polymer particles, based on the total weight of the dispersion. The first polymer particles of Example 1.2 have a Tg of 5 °C .

Example 1.3 - A monomer emulsion is prepared by combining 969 g of BA, 34 g of MAA, 680 g of MMA, 460 g DI water, and 18.7 g Triton™ XN-45S surfactant (Triton is a trademark of Dow Chemical Co.), with stirring. Next, 2.5 g Triton™ XN-45S surfactant and 1000 g DI water are charged to a 5-liter multi-neck stirred flask. The contents of the flask are heated to 85 °C under a nitrogen atmosphere. To the stirred flask contents are added 92 g of the monomer emulsion followed by 2.6 g APS in 100 g DI water, and then followed by 1.7g sodium carbonate in 100 g DI water. Next, 34 g of a 50 weight % solution of ureido methacrylate is added to the remainder of the monomer emulsion and the gradual addition of the monomer emulsion is subsequently initiated. The total addition time for the monomer emulsion is 210 minutes. The contents of the flask are maintained at a temperature of 83 °C throughout the addition of the monomer mixture. Next, 60 g DI water is used to rinse the emulsion feed line to the reactor. The contents of the flask is cooled to 65 °C. Next 6.6 ppm ferrous sulfate, 1 g t-butyl hydroperoxide, and 0.5 g D-isoascorbic acid in aqueous solutions are added to the flask. The contents of the flask are neutralized to a pH of 9.5 with ammonium hydroxide. The resulting aqueous dispersion, Example 1.3, contains 46.7 wt % of the first polymer particles based on the total weight of the dispersion. The first polymer particles have a glass transition temperature of -6 °C.

EXAMPLE 2 - Preparation of Aqueous Dispersions Containing Second Polymer Particles

Example 2.1- An emulsion polymerization reaction is carried out in a reactor equipped with an agitator, a thermocouple, and heating/cooling device. The reactor is charged with 1562 g DI water at 55 °C and 1,260 g of a crosslinked polybutyl acrylate polymer seed dispersion having a mean particle diameter of 230 nm and 50.8 wt% solids. The reactor contents are sparged with nitrogen for thirty minutes. Next, 1.4 g tartaric acid diluted in 100 g DI water are added to the reactor. Immediately, 70.3 g SLS (28 wt%) is added to the reactor. A nitrogen sweep is applied after the SLS addition. A monomer emulsion is prepared containing 2,231.7 g DI water, 117.1 g SLS, 6321.1 g BA, 44.6 g ALMA. With the contents of the reactor at 50 °C, 893.6 g of the monomer emulsion is added to the reactor. After this first charge of monomer emulsion, 1.12 g t-BHP is added. The temperature increases to 60 °C and is maintained at 60 °C for an additional 15 minutes. An additional 65.1 g SLS and 248.5 g DI water are added to the remaining monomer emulsion.

The reactor contents are cooled to 53 °C and a second charge of 1,295.2 g of monomer emulsion is added to the reactor. Immediately, 2.08 g t-BHP is added to the reactor. The temperature increases to above 75 °C and maintained for an additional 15 minutes. Next, a solution of 20 g sodium sulfate in 2,155 g DI water is added to the kettle. After this addition, the contents of the reactor are cooled to 45 °C and 2,220.6 g of monomer emulsion is added to the reactor. Immediately, 3.57 g t-BHP is added to the reactor. The temperature increases to above 85 °C and is maintained for an additional 15 minutes. The reactor contents are cooled to 55 °C and the remaining monomer emulsion is added to the kettle. Immediately, 3.43 g of t-BHP is added to the reactor. The temperature of the contents of the reactor increases reaches above 50 °C and is maintained for 3 minutes. Then 1.16 g t-BHP and 1.01 g SSF diluted in 48.2 g DI water are added to the reactor. The reactor contents are maintained at temperature for an additional 30 minutes and then are allowed to cool to 53 °C. A second monomer emulsion is prepared containing 260.3 g DI water, 15.6 g SLS, and 447.2 g MMA. With the contents of the reactor at 53 °C, the second monomer emulsion is completely added to the reactor. Immediately, a solution of 0.9 g SSF diluted in 52 g of DI water is added followed by the addition of 0.9 g NaPS. The nitrogen sweep is turned off at peak temperature. The reactor contents are maintained at peak temperature for an additional 60 minutes. The contents of the reactor are cooled to 40 °C and then filtered through a 400 micron filter. Aqueous ammonium hydroxide (29% active) is added until the pH is 8.5. The resulting aqueous dispersion, Example 2.1, contains second polymer particles containing 94 wt % second polymer having a Tg of -54 °C, and 6 wt % of polymer shell phase with a Tg of 105 °C. The aqueous dispersion of Example 2.2 has a solids level of 49 wt %s.

Example 2.2 - A monomer emulsion is prepared by combining 925g BA, 5g MAA,

10g ALMA, and 50 g VT with 455 g DI water, 6.9 g sodium carbonate, and 30.5 g SLS, with stirring. To a 3-liter multi-neck stirred flask fitted, 5.2 g SLS and 400 g DI water are added. The flask contents are heated to 85 °C under nitrogen. To the stirred flask contents are added 35 g monomer emulsion followed by 3.5 g APS in 10 g DI water. To the remaining monomer emulsion is added 20 g of a 50 weight % solution of ureido methacrylate. The monomer emulsion is gradually added over a period of 210 minutes. The contents of the flask is maintained at a temperature of 83°C throughout the monomer addition. Next, 20 g DI water is used to rinse the emulsion feed line to the flask. After the complete addition of the monomer emulsion, the contents of the flask is allowed to cool to 60°C. Aqueous solutions of 10 ppm ferrous sulfate, 1 g t-butyl hydroperoxide, and 0.5 g D-Isoascorbic acid are added to the flask. The contents of the flask is neutralized to pH 9.5 with ammonium hydroxide. The resulting aqueous dispersion, Example 2.2, contains second polymer particles with a Tg of -55 °C.

Example 2.3 - Monomer emulsion I (ME I) is prepared by combining 869.5 g BA, 4.7 g MAA, 9.4 g ureido methacrylate, 9.4 g ALMA, and 47g VT with 436.1 g DI water, 6.9 g sodium carbonate, and 28.7 g SLS, with stirring. Monomer emulsion II (ME II) is prepared by combining 60g MMA with 27.3 g DI water and 1.83 g SLS, and emulsifying with stirring. To a 3-liter multi-neck stirred flask, 5.2 g SLS and 400 g DI water are added. The flask contents are heated to 85 °C under nitrogen. To the flask contents are added 35 g ME I followed by 3.5 g APS in 10 g DI water. Then the balance of ME1 is added gradually. The contents of the flask are maintained at a temperature of 83 °C during the addition of ME I. The emulsion addition line is rinsed with 20 g DI water, which is added to the flask. After complete addition of ME I, the contents of the flask are allowed to cool to 60 °C. Next, ME II is added to the flask and allowed to stir for 30 minutes. Aqueous solutions of 10 ppm ferrous sulfate, 1 g t-butyl hydroperoxide, and 0.5 g D-isoascorbic acid are added. The contents of the flask are maintained at 65 °C for 1 hour. The contents of the flask are neutralized to pH 9.5 with ammonium hydroxide. The resulting aqueous dispersion, Example 2.3, includes second polymer particles with 94 wt % second polymer with a Tg of -55°C, and 6 wt % polymer shell with a Tg of 105°C.

Example 2.4 - An emulsion polymerization reaction is carried out in a reactor equipped with a mechanical agitator, a thermocouple, and a heating/cooling device. The reactor is charged with 1562 g DI water and 1260 g of a crosslinked polybutyl acrylate polymer seed dispersion having a mean particle diameter of 230 nm at 50.8 wt% solids, and heated to 55 °C. The reactor contents is sparged with nitrogen for thirty minutes. A solution of 1.4 g tartaric acid diluted in 100 g DI water is added to the reactor, followed by the immediate addition of 70.3 g SLS. A nitrogen sweep is applied after the SLS addition. A monomer emulsion is prepared by combining 2,231.7 g DI water, 117.1 g SLS, 6321.1 g BA, and 44.6 g ALMA. With the contents of the reactor at 50 °C, 893.6 g of the monomer emulsion is added to the reactor. After this first charge of monomer emulsion, 1.12 g t-BHP is added. The reactor temperature increases to 60 °C and the contents of the reactor are maintained at 60 °C for an additional 15 minutes. An additional 65.1 g SLS and 248.5 g DI water are added to the remaining monomer emulsion. The reactor contents are cooled to 53 °C and a second charge of 1295.2 g of monomer emulsion is added to the reactor, followed by the immediate addition of 2.08 g of t-BHP. The temperature of the reactor contents increases to above 75 °C and is maintained at peak temperature for an additional 15 minutes. Next, a solution of 20 g of sodium sulfate in 2,155 g DI water is added to the reactor. After this addition, the reactor contents are cooled to 45 °C and 2220.6 g of monomer emulsion is added to the reactor, followed by the immediate addition of 3.57 g t-BHP. The temperature of the reactor contents increases to a peak temperature above 85 °C and is maintained at peak temperature for an additional 15 minutes. The reactor contents are cooled to 55 °C and the remaining monomer emulsion is added to the kettle, followed by the immediate addition of 3.43 g t-BHP. The temperature of the reactor contents increases to a peak temperature above 50°C and is maintained at peak temperature for 3 minutes. After three minutes, 1.16 g t-BHP and 1.01 g SSF diluted in 48.2 g DI water are added to the reactor. The reactor contents are maintained at temperature for an additional 30 minutes. Aqueous ammonium hydroxide (29% active) is added until the pH of the reactor contents is 8.5. The resulting polymer dispersion, Example 2.4, has a solids level of 49 wt % and contains second polymer particles with a Tg of -54 °C.

COMPARATIVE EXAMPLE A - Preparation of An Aqueous Dispersion Containing Comparative Second Polymer Particles

A monomer mixture is prepared by combining 413 g DI water, 16.4 g SLS, 495.6 g BA, 1285.0 g MMA, and 36.7 g MAA. Next, 1482 g DI water and 32.8 g SLS are added to a 5-liter flask equipped with mechanical stirring. The contents of the flask are heated to 85 °C. A solution containing 5.7 g sodium carbonate dissolved in 56 g DI water is added to the flask, followed by 102 g of the monomer emulsion, followed by a solution containing 7.3 g ammonium persulfate dissolved in 51 g DI water. Next, 36.7 g of 50 weight % ureido methacrylate is added to the monomer emulsion. The remainder of monomer emulsion is added to the flask over a period of 90 minutes, while contents of the flask are maintained at 84 °C. The flask contents is maintained at temperature for 10 minutes and then cooled to 65 °C. Next 6.6 ppm ferrous sulfate, 1 g t-butyl hydroperoxide, and 0.5 g D-isoascorbic acid in aqueous solutions are added to the flask. After cooling to 45 °C, the contents of the flask are neutralized with the addition of 16.0 g ammonium hydroxide (29% active) and diluted with DI water. The resulting aqueous dispersion, Comparative Example A, contains 45.9 wt % of the comparative second polymer particles, based on the total weight of the dispersion. The comparative second polymer particles have a glass transition temperature of 43 °C.

EXAMPLE 3 - Preparation of Aqueous Coating Compositions

Titanium dioxide dispersions are prepared by mixing the ingredients in Table 3.1 in the order listed under high shear conditions.

Table 3.1 - Titanium Dioxide Dispersion

| Ingredient | Weight in grams |
| --- | --- |
| Tamol™ 731A dispersant (Rohm and Haas Co.) | 13.99 |
| Tego™ Foamex 810 defoamer (Degussa AG) | 1.13 |
| Surfynol™ CT-111 surfactant (Air Products) | 2.25. |
| Ti-Pure™ R-706 titanium dioxide (E. I. DuPont DeNemours Co.) | 264.44 |
| Water | 62.26 |

The aqueous coating compositions, Example 3, and the comparative aqueous coating composition, Comparative Example B, are prepared by combining the ingredients in Table 3.2 in the order listed with low shear mixing

Table 3.2 - Aqueous Coating Compositions and Comparative Aqueous Coating Composition

| Ingredient | Example 3.1 | Example 3.2 | Example 3.3 | Example 3.4 |
|---|---|---|---|---|
| titanium dioxide dispersion (3.1) | 344.07 g | 344.07 g | 344.07 g | 344.07 g |
| Water | 20.00 g | 20.00 g | 20.00 g | 20.00 g |
| propylene glycol | 16.50 g | 16.50 g | 16.50 g | 16.50 g |
| Example 1.1 | 430.1 g | 430.1 g | 430.1 g | - |
| Example 1.2 | - | - | - | 430.1 g |
| Example 2.1 | 106.2g | - | - | 106.2g |
| Example 2.2 | - | 106.2g | - | - |
| Example 2.3 | - | - | 106.2g | - |
| Surfynol™ CT-111 surfactant | 1.00 g | 1.00 g | 1.00 g | 1.00 g |
| ammonia (28%) | 0.70 g | 0.70 g | 0.70 g | 0.70 g |
| Acrysol™ RM-2020 NPR rheology modifier | 29.00 g | 29.00 g | 29.00 g | 29.00 g |
| Acrysol™ RM-8W rheology modifier | 5.60 g | 5.60 g | 5.60 g | 5.60 g |
| Water | 104.2 g | 104.2 g | 104.2 g | 104.2 g |
| VOC (weight %) | 1.5 | 1.5 | 1.5 | 1.5 |

Table 3.2 (continued) - Aqueous Coating Compositions and Comparative Aqueous Coating Composition

| Ingredient | Example 3.5 | Example 3.6 | Comp. Ex. B |
|---|---|---|---|

| titanium dioxide dispersion | 344.07 g | 344.07 g | 344.07 g |
|---|---|---|---|
| Water | 20.00 g | 20.00 g | 20.00 g |
| propylene glycol | 16.50 g | 16.50 g | 16.50 g |
| Example 1.1 | - | 430.1 g | 430.1 g |
| Example 1.3 | 430.1 g | | - |
| Example 2.1 | 106.2g | | - |
| Example 2.4 | | 106.2g | |
| Comparative Example A | - | | 115.26 g |
| Surfynol™ CT-111 surfactant | 1.00 g | 1.00 g | 1.00 g |
| ammonia (28%) | 0.70 g | 0.70 g | 0.70 g |
| Acrysol™ RM-2020 NPR rheology modifier | 29.00 g | 29.00 g | 29.00 g |
| Acrysol™ RM-8W rheology modifier | 5.60 g | 5.60 g | 5.60 g |
| Water | 104.2 g | 104.2 g | 113.62 g |
| VOC (weight %) | 1.5 | 1.5 | 1.5 |

EXAMPLE 4 - Preparation of Aqueous Coating Compositions and Comparative Aqueous Coating Composition For Dirt Pickup Resistance Measurements

Titanium dioxide dispersions are prepared according to the procedure of Example 3. Next, the aqueous compositions, Example 4, and the comparative aqueous coating composition, Comparative C, are prepared by adding the ingredients in Table 4.1 in the order listed with low shear mixing.

Table 4.1 – Aqueous Coating Composition and Comparative Aqueous Coating Composition

| Ingredient | Example 4.1 | Example 4.2 | Example 4.3 | Example 4.4 |
|---|---|---|---|---|
| titanium dioxide dispersion | 344.07 g | 344.07 g | 344.07 g | 344.07 g |
| Water | 20.00 g | 20.00 g | 20.00 g | 20.00 g |
| propylene glycol | 16.50 g | 16.50 g | 16.50 g | 16.50 g |
| Example 1.1 | 430.1 g | 430.1 g | 430.1 g | - |

| | | | | |
|---|---|---|---|---|
| Example 1.2 | - | - | - | 430.1 g |
| Example 2.1 | 106.2g | - | - | 106.2g |
| Example 2.2 | - | 106.2g | - | - |
| Example 2.3 | - | - | 106.2g | - |
| Surfynol™ CT-111 surfactant | 1.00 g | 1.00 g | 1.00 g | 1.00 g |
| ammonia (28%) | 0.70 g | 0.70 g | 0.70 g | 0.70 g |
| Polyphase™ AF-1 biocide (Troy Corporation) | 8.00 g | 8.00 g | 8.00 g | 8.00 g |
| Acrysol™ RM-2020 NPR rheology modifier | 29.00 g | 29.00 g | 29.00 g | 29.00 g |
| Acrysol™ RM-8W rheology modifier (Rohm and Haas Co.) | 5.60 g | 5.60 g | 5.60 g | 5.60 g |
| Water | 104.2 g | 104.2 g | 104.2 g | 104.2 g |
| VOC (weight %) | 1.95 | 1.95 | 1.95 | 1.95 |

Table 4.1(continued) – Aqueous Coating Compositions and Comparative Aqueous Coating Composition

| Ingredient | Example 4.5 | Example 4.6 | Comparative C |
|---|---|---|---|
| titanium dioxide dispersion | 344.07 g | 344.07 g | 344.07 g |
| Water | 20.00 g | 20.00 g | 20.00 g |
| propylene glycol | 16.50 g | 16.50 g | 16.50 g |
| Example 1.1 | - | 430.1 g | 537.65 g |
| Example 1.2 | - | - | - |
| Example 1.3 | 430.1 g | - | - |
| Example 2.1 | 106.2g | - | - |
| Example 2.4 | - | 106.2g | - |
| Surfynol™ CT-111 surfactant | 1.00 g | 1.00 g | 1.00 g |
| ammonia (28%) | 0.70 g | 0.70 g | 0.70 g |
| Polyphase™ AF-1 biocide (Troy Corporation) | 8.00 g | 8.00 g | 8.00 g |
| Acrysol™ RM-2020 NPR rheology modifier (Rohm and Haas Co.) | 29.00 g | 29.00 g | 29.00 g |

| Acrysol™ RM-8W rheology modifier (Rohm and Haas Co.) | 5.60 g | 5.60 g | 5.60 g |
|---|---|---|---|
| Water | 104.2 g | 104.2 g | 113.62 g |
| VOC (weight %) | 1.95 | 1.95 | 1.95 |

EXAMPLE 5 - Evaluation of Scrub Resistance

Dry coating samples are prepared from the aqueous coating compositions, Examples 3.1-3.6, and the comparative aqueous coating composition, Comparative B, and are evaluated according to the procedure for the scrub resistance test. The scrub resistances for the dry coatings prepared from the aqueous coating compositions of this invention, Examples 3.1-3.6, are greater than 110% of the scrub resistance of the dry coating prepared from the comparative aqueous coating composition, Comparative B. Thus, the relative scrub resistance value, RS, is greater than 1.1. This result indicates improved scrub resistance for the dry coatings prepared from the aqueous coating compositions of this invention relative to the dry coating prepared from the comparative aqueous coating composition.

EXAMPLE 6 - Evaluation of Dirt Pickup Resistance

Dry coating samples are prepared from the aqueous coating compositions, Examples 4.1-4.6, and the comparative aqueous coating composition, Comparative C and are evaluated according to the procedure for the dirt pickup resistance test. The dirt pickup resistances for the dry coatings prepared from the aqueous coating compositions of this invention, Examples 4.1-4.6, are greater than 110% of the dirt pickup resistance of the dry coating prepared from the comparative aqueous coating composition, Comparative C. Thus, the relative dirt pickup resistance values, RL, are greater than 1.1. This result indicates improved dirt pickup resistances for the dry coatings prepared from the aqueous coating compositions of this invention relative to the dry coating prepared from the comparative polymer dispersion.

**Claims**

1. An aqueous polymer dispersion comprising:

   a) from 60 to 95 weight % first polymer particles, and
   b) from 5 to 40 weight % second polymer particles, based on the total weight of said first polymer particles and said second polymer particles;

   wherein said first polymer particles have a glass transition temperature in the range of from -20 °C to 25 °C;
   wherein said second polymer particles have a glass transition temperature of less than 0 °C, and
   wherein said second polymer particles comprise as polymerized units, monoethylenically unsaturated monomer and at least 0.2 mole % multiethylenically unsaturated monomer, based on the total number of moles o said monoethylenically unsaturated monomer and said multiethylenically unsaturated monomer in said second polymer particles.

2. The aqueous polymer dispersion according to claim 1 wherein said second polymer particles further comprise a polymer shell having a glass transition temperature of at least 60 °C.

3. The aqueous polymer dispersion according to claim 1 wherein said first polymer particles, said second polymer particles, or both comprise, as polymerized units, from 0.5 to 5.0% vinyl toluene, by weight based on the weight of said polymer particles.

4. An aqueous coating composition comprising the aqueous polymer dispersion of claim 1 wherein said coating composition has a VOC of from 0 to 5%, by weight based on the total weight of said aqueous coating composition.

5. The aqueous coating composition according to claim 1 further comprising from 0.1 to 1.0% by weight based on the total weight of said first polymer particles and said second polymer particles of at least one photoabsorber selected from benzophenone or substituted benzophenones.

6.  A method for preparing a dry coating comprising the steps of:

    a) providing an aqueous coating composition, said composition comprising an aqueous polymer dispersion comprising:

    i) from 60 to 95 weight % first polymer particles, and
    ii) from 5 to 40 weight % second polymer particles, based on the total weight of said first polymer particles and said second polymer particles;
    wherein said first polymer particles have a glass transition temperature in the range of from -20 °C to 25 °C;
    wherein said second polymer particles have a glass transition temperature of less than 0 °C, and
    wherein said second polymer particles comprise as polymerized units, monoethylenically unsaturated monomer and at least 0.2 mole % multiethylenically unsaturated monomer, based on the total number of moles of said monoethylenically unsaturated monomer and said multiethylenically unsaturated monomer in said second polymer particles:

    b) applying said aqueous coating composition to a substrate; and
    c) drying or allowing to dry said aqueous coating composition.

7.  The method according to claim 6 wherein said second polymer particles further comprise a polymer shell having a glass transition temperature of at least 60 °C.

8.  The method according to claim 6 wherein said aqueous coating composition further comprises from 0.1 to 1.0% by weight based on the total weight of said first polymer particles and said second polymer particles of at least one photoabsorber selected from benzophenone or substituted benzophenones.

9.  The method according to claim 6 wherein said first polymer particles, said second polymer particles, or both comprise, as polymerized units, from 0.5 to 5.0% vinyl toluene, by weight based on the weight of said polymer particles.

10. The method according to claim 6 wherein said coating composition has a VOC of from 0 to 5%, by weight based on the total weight of said aqueous coating composition.


**Patentansprüche**

1.  Wäßrige Polymerdispersion, umfassend

    a) von 60 bis 95 Gew.-% erste Polymerteilchen und
    b) von 5 bis 40 Gew.-% zweite Polymerteilchen, bezogen auf das Gesamtgewicht der ersten Polymerteilchen und der zweiten Polymerteilchen,

    wobei die ersten Polymerteilchen eine Glasübergangstemperatur im Bereich von -20°C bis 25°C aufweisen,
    wobei die zweiten Polymerteilchen eine Glasübergangstemperatur von weniger als 0°C aufweisen und
    wobei die zweiten Polymerteilchen als polymerisierte Einheiten monoethylenisch ungesättigtes Monomer und mindestens 0,2 mol% multiethylenisch ungesättigtes Monomer, bezogen auf die gesamte Anzahl an Mol des monoethylenisch ungesättigten Monomers und des multiethylenisch ungesättigten Monomers in den zweiten Polymerteilchen, umfassen.

2.  Wäßrige Polymerdispersion nach Anspruch 1, wobei die zweiten Polymerteilchen weiter eine Polymerschale mit einer Glasübergangstemperatur von mindestens 60°C umfassen.

3.  Wäßrige Polymerdispersion nach Anspruch 1, wobei die ersten Polymerteilchen, die zweiten Polymerteilchen oder beide als polymerisierte Einheiten von 0,5 bis 5,0 Gew.-% Vinyltoluol, bezogen auf das Gewicht der Polymerteilchen, umfassen.

4.  Wäßrige Beschichtungszusammensetzung, umfassend die wäßrige Polymerdispersion nach Anspruch 1, wobei die Beschichtungszusammensetzung einen VOC bzw. Anteil an flüchtigen organischen Verbindungen von 0 bis 5 Gew.-%, bezogen auf das Gesamtgewicht der wäßrigen Beschichtungszusammensetzung, aufweist.

**5.** Wäßrige Beschichtungszusammensetzung nach Anspruch 1, weiter von 0,1 bis 1,0 Gew.-%, bezogen auf das Gesamtgewicht der ersten Polymerteilchen und der zweiten Polymerteilchen, mindestens eines Photoabsorbers, ausgewählt aus Benzophenon oder substituierten Benzophenonen, umfassend.

**6.** Verfahren zum Herstellen einer Trockenbeschichtung, umfassend die Schritte:

a) das Bereitstellen einer wäßrigen Beschichtungszusammensetzung, wobei die Zusammensetzung eine wäßrige Polymerdispersion umfaßt, umfassend

i) von 60 bis 95 Gew.-% erste Polymerteilchen und
ii) von 5 bis 40 Gew.-% zweite Polymerteilchen, bezogen auf das Gesamtgewicht der ersten Polymerteilchen und der zweiten Polymerteilchen,
wobei die ersten Polymerteilchen eine Glasübergangstemperatur im Bereich von -20°C bis 25°C aufweisen,
wobei die zweiten Polymerteilchen eine Glasübergangstemperatur von weniger als 0°C aufweisen und
wobei die zweiten Polymerteilchen als polymerisierte Einheiten monoethylenisch ungesättigtes Monomer und mindestens 0,2 mol% multiethylenisch ungesättigtes Monomer, bezogen auf die gesamte Anzahl an Mol des monoethylenisch ungesättigten Monomers und des multiethylenisch ungesättigten Monomers in den zweiten Polymerteilchen, umfassen,

b) das Aufbringen der wäßrigen Beschichtungszusammensetzung auf ein Substrat und
c) das Trocknen oder das Erlauben der wäßrigen Beschichtungszusammensetzung zu trocknen.

**7.** Verfahren nach Anspruch 6, wobei die zweiten Polymerteilchen weiter eine Polymerschale mit einer Glasübergangstemperatur von mindestens 60°C umfassen.

**8.** Verfahren nach Anspruch 6, wobei die wäßrige Beschichtungszusammensetzung weiter von 0,1 bis 1,0 Gew.-%, bezogen auf das Gesamtgewicht der ersten Polymerteilchen und der zweiten Polymerteilchen, mindestens eines Photoabsorbers, ausgewählt aus Benzophenon oder substituierten Benzophenonen, umfaßt.

**9.** Verfahren nach Anspruch 6, wobei die ersten Polymerteilchen, die zweiten Polymerteilchen oder beide als polymerisierte Einheiten von 0,5 bis 5,0 Gew.-% Vinyltoluol, bezogen auf das Gewicht der Polymerteilchen, umfassen.

**10.** Verfahren nach Anspruch 6, wobei die Beschichtungszusammensetzung einen VOC von 0 bis 5 Gew.-%, bezogen auf das Gesamtgewicht der wäßrigen Beschichtungszusammensetzung, aufweist.

**Revendications**

**1.** Dispersion aqueuse de polymère comprenant :

a) de 60 à 95 % en poids de particules d'un premier polymère, et
b) de 5 à 40 % en poids de particules d'un second polymère, par rapport au poids total desdites particules du premier polymère et desdites particules du second polymère ;

**caractérisée en ce que** lesdites particules du premier polymère ont une température de transition vitreuse dans l'intervalle de -20°C à 25°C ;
**caractérisée en ce que** lesdites particules du second polymère ont une température de transition vitreuse inférieure à 0°C, et
**caractérisée en ce que** lesdites particules du second polymère comprennent comme unités polymérisées, un monomère à insaturation monoéthylénique et au moins 0,2 % en moles d'un monomère à insaturation polyéthylénique, par rapport au nombre total de moles dudit monomère à insaturation monoéthylénique et dudit monomère à insaturation polyéthylénique dans lesdites particules du second polymère.

**2.** Dispersion aqueuse de polymère selon la revendication 1, **caractérisée en ce que** lesdites particules du second polymère comprennent en plus une coque qui a une température de transition vitreuse d'au moins 60°C.

**3.** Dispersion aqueuse de polymère selon la revendication 1, **caractérisée en ce que** lesdites particules du premier polymère, lesdites particules du second polymère, ou les deux comprennent, comme unités polymérisées, de 0,5 à 5,0 % en poids de vinyl toluène, par rapport au poids desdites particules de polymère.

4. Composition aqueuse de revêtement comprenant la dispersion aqueuse de polymère selon la revendication 1, **caractérisée en ce que** ladite composition aqueuse de revêtement a un VOC de 0 à 5 % en poids, par rapport au poids total de ladite composition aqueuse de revêtement.

5. Composition aqueuse de revêtement selon la revendication 1 comprenant en plus de 0,1 à 1,0 % en poids, par rapport au poids total desdites particules du premier polymère et desdites particules du second polymère, d'au moins un photo-absorbeur choisi parmi la benzophénone ou les benzophénones substituées.

6. Procédé de préparation d'un revêtement sec comprenant les étapes :

   a) d'apport d'une composition aqueuse de revêtement, ladite composition comprenant une dispersion aqueuse de polymère comprenant :

   i) de 60 à 95 % en poids de particules d'un premier polymère, et
   ii) de 5 à 40 % en poids de particules d'un second polymère, par rapport au poids total desdites particules du premier polymère et desdites particules du second polymère ;
   **caractérisée en ce que** lesdites particules du premier polymère ont une température de transition vitreuse dans l'intervalle de -20°C à 25°C ;
   **caractérisée en ce que** lesdites particules du second polymère ont une température de transition vitreuse inférieure à 0°C, et
   **caractérisée en ce que** lesdites particules du second polymère comprennent comme unités polymérisées, un monomère à insaturation monoéthylénique et au moins 0,2 % en moles d'un monomère à insaturation polyéthylénique, par rapport au nombre total de moles dudit monomère à insaturation monoéthylénique et dudit monomère à insaturation polyéthylénique dans lesdites particules du second polymère :

   b) d'application de ladite composition aqueuse de revêtement sur un substrat ; et
   c) de séchage ou de permettre à ladite composition aqueuse de revêtement de sécher.

7. Procédé selon la revendication 6, **caractérisé en ce que** lesdites particules du second polymère comprennent en plus une coque qui a une température de transition vitreuse d'au moins 60°C.

8. Procédé selon la revendication 6, **caractérisé en ce que** lesdites particules du second polymère comprennent en plus de 0,1 à 1,0 % en poids, par rapport au poids total desdites particules du premier polymère et desdites particules du second polymère, d'au moins un photo-absorbeur choisi parmi la benzophénone ou les benzophénones substituées.

9. Procédé selon la revendication 6, **caractérisé en ce que** lesdites particules du premier polymère, lesdites particules du second polymère, ou les deux comprennent, comme unités polymérisées, de 0,5 à 5,0 % en poids de vinyl toluène, par rapport au poids desdites particules de polymère.

10. Procédé selon la revendication 6, **caractérisé en ce que** ladite composition de revêtement a un VOC de 0 à 5 % en poids, par rapport au poids total de ladite composition aqueuse de revêtement.